(19) Europäisches Patentamt
European Patent Office
Office européen des brevets

(11) **EP 4 124 500 B1**

(12) **EUROPEAN PATENT SPECIFICATION**

(45) Date of publication and mention
of the grant of the patent:
**28.08.2024 Bulletin 2024/35**

(21) Application number: **22187968.7**

(22) Date of filing: **29.07.2022**

(51) International Patent Classification (IPC):
*H02J 1/10* *(2006.01)*

(52) Cooperative Patent Classification (CPC):
**B60L 53/53; B60L 53/63; B60L 53/67; H02J 1/106;**
**H02J 7/0013; H02J 7/02;** H02J 2310/48;
Y02T 10/70; Y02T 10/7072; Y02T 10/72;
Y02T 90/12; Y02T 90/16

(54) **CHARGING CONTROL METHOD, CHARGING SYSTEM, AND RELATED DEVICE**

LADESTEUERUNGSVERFAHREN, LADESYSTEM UND ENTSPRECHENDE VORRICHTUNG

PROCÉDÉ DE COMMANDE DE CHARGE, SYSTÈME DE CHARGE, ET DISPOSITIF ASSOCIÉ

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **31.07.2021 CN 202110877365**

(43) Date of publication of application:
**01.02.2023 Bulletin 2023/05**

(73) Proprietor: **Huawei Digital Power Technologies**
**Co., Ltd.**
**Shenzhen, 518043 (CN)**

(72) Inventors:
• **TANG, Lin**
**Shenzhen, 518129 (CN)**
• **LIN, Quanxi**
**Shenzhen, 518129 (CN)**
• **CHEN, Zihao**
**Shenzhen, 518129 (CN)**

(74) Representative: **Gill Jennings & Every LLP**
**The Broadgate Tower**
**20 Primrose Street**
**London EC2A 2ES (GB)**

(56) References cited:
**CN-A- 110 601 334     US-A1- 2011 204 720**

• **KISUK KIM ET AL: "Power demand and power**
**quality analysis of EV charging station using**
**BESS in MicroGrid", VEHICLE POWER AND**
**PROPULSION CONFERENCE (VPPC), 2012 IEEE,**
**IEEE, 9 October 2012 (2012-10-09), pages 996 -**
**1001, XP032321355, ISBN: 978-1-4673-0953-0,**
**DOI: 10.1109/VPPC.2012.6422752**
• **MAHMUD KHIZIR ET AL: "Peak-Load**
**Management in Commercial Systems With**
**Electric Vehicles", IEEE SYSTEMS JOURNAL,**
**IEEE, US, vol. 13, no. 2, 1 June 2019 (2019-06-01),**
**pages 1872 - 1882, XP011727472, ISSN:**
**1932-8184, [retrieved on 20190531], DOI:**
**10.1109/JSYST.2018.2850887**

EP 4 124 500 B1

## Description

### TECHNICAL FIELD

This application relates to the field of electric vehicle technologies, and in particular, to a charging control method, a charging system, and a related device.

### BACKGROUND

An aggregate charging behavior of electric vehicles causes stress to power load of a local region, and a charging behavior of an electric vehicle during peak hours of power load increases a burden of a power grid. Therefore, a charging system is required to reduce impact of charging of the electric vehicle on the power grid and relieve the burden of the power grid.

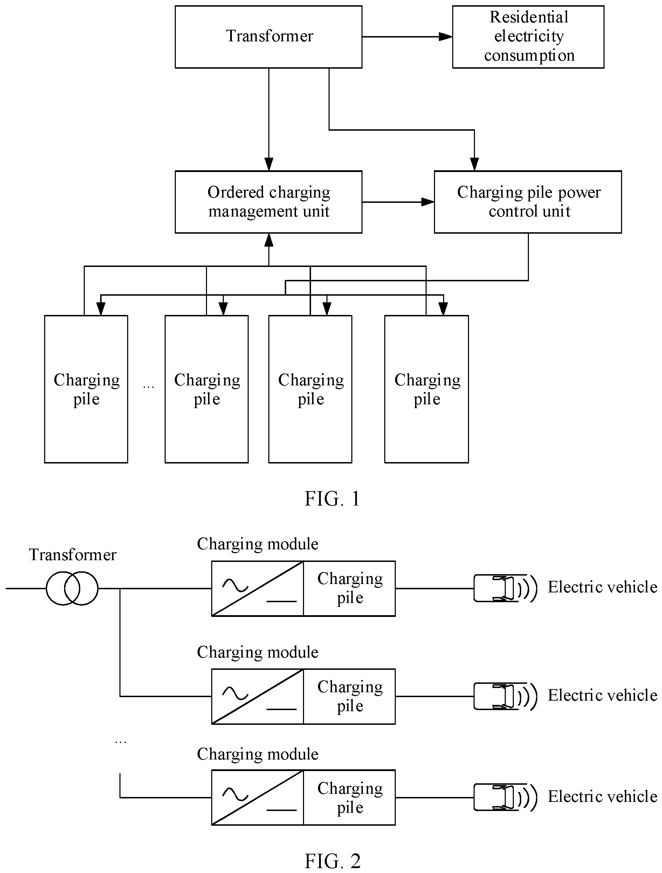

A conventional technology provides a charging system. As shown in FIG. 1, the charging system includes a transformer deployed in a campus, and an ordered charging management unit, a charging pile power control unit, and a plurality of charging piles that are related to charging of an electric vehicle. The transformer is configured to provide electricity for residential electricity consumption in the campus and electricity consumption of the plurality of charging piles. Specifically, in a process in which the charging system charges the electric vehicle, the ordered charging management unit detects current power load of the residential electricity consumption, and compares the current power load with a pre-stored threshold (the threshold may be power load, during peak hours of electricity consumption, that is calculated based on electricity consumption habits of residents within a period of time). If the current power load is greater than or equal to the threshold, it indicates that current residential electricity consumption is in peak hours of electricity consumption, and the ordered charging management unit sends, to the charging pile power control unit, an instruction for turning off the charging pile or reducing an output power of the charging pile. When receiving the instruction, the charging pile power control unit turns off the charging pile or reduces the output power of the charging pile.

In the foregoing technical solution, during the peak hours of residential electricity consumption, the charging pile power control unit preferentially ensures residential electricity consumption by turning off the charging pile or reducing the output power of the charging pile. However, in the manner of turning off the charging pile, a quantity of times of turning on and turning off the charging pile is increased, and a service life of the charging pile is shortened; and in the manner of reducing the output power of the charging pile, a charging time is prolonged, and user experience is degraded. US 2011/204720 A1 relates to energy demand and supply for buildings, vehicles, and equipment, and describes that energy may be stored in one or more battery packs for use in buildings, appliances, and equipment typically relying on energy from a power grid. The energy is stored during periods of low demand and/or low cost of energy. The stored energy is used to reduce demand on the power utility during periods of high demand and/or provide energy back to the power utility to meet demands.

Kisuk Kim et al: "Power demand and power quality analysis of EV charging station using BESS in Microgrid" describes a Battery Energy Storage System (BESS) which stores electric energy during low peak power and charges EV and during peak hours.

Mahmud Khizir et al: "Peak-Load Management in Commercial Systems with Electric Vehicles" describes an algorithm for peak load management wherein power from EVs batteries is used during peak load hours. CN110601334 belongs to the technical field of integrated energy micro-grids, and particularly relates to a charging station and a method for energy scheduling management thereof.

### SUMMARY

This application provides a charging control method, a charging system, and a related device, to reduce impact of charging of an electric vehicle on a power grid during peak hours of load, and improve charging experience of a user. To achieve the foregoing objective, the following technical solutions are used in embodiments of this application. The present invention is defined by the features disclosed in the independent claims and as described in the second and fourth aspects mentioned below. Additional embodiments are defined in the dependent claims.

According to a second aspect, a charging control method is provided, and is applied to a rectification device. The method includes: The rectification device receives first information from a charger, where the first information is used to indicate that a first charging pile is to charge a first vehicle. The rectification device obtains electricity consumption load of a campus, where the electricity consumption load of the campus is electricity consumption load of a residential electrical device in the campus, and the electricity consumption load of the campus is electricity consumption load of a campus in which the rectification device and the charger are located. If the electricity consumption load of the campus is greater than a first load threshold, the rectification device sends second information to the charger, where the second information is used to indicate that an energy storage device is to supply power to the charger.

In the foregoing technical solution, if the electricity consumption load of the campus is greater than the first load threshold, in other words, the electricity consumption load of the campus is at a load peak, the rectification device sends the second information to the charger, where the second information is used to indicate that the energy storage device is to supply power to the charger. In this process, a charging requirement of an electric vehicle is met, and impact of charging of the electric vehicle on a power grid during peak hours of load is also reduced, thereby relieving a burden of the power grid.

In a possible implementation of the second aspect, if the electricity consumption load of the campus is less than a second load threshold, the rectification device sends third information to the charger, where the third information is used to indicate that the rectification device is to supply power to the charger, and the second load threshold is less than the first load threshold. In the foregoing possible implementation, the electricity consumption load of the campus is less than the second load threshold, in other words, the electricity consumption load of the campus is at a load trough, and the rectification device supplies power to the charger, to meet a charging requirement of an electric vehicle.

In a possible implementation of the second aspect, the rectification device is connected to the energy storage device, and if the electricity consumption load of the campus is less than the second load threshold, the rectification device charges the energy storage device. In the foregoing possible implementation, when the electricity consumption load of the campus is less than the second load threshold, in other words, load of the campus is at a load trough, the rectification device charges the energy storage device, so that the energy storage device stores electric energy at the load trough, and supplies power to the charger when the electricity consumption load of the campus is at a load peak. In this process, an electricity price at the load trough is lower than that at the load peak in the campus, thereby reducing electricity consumption costs.

In a possible implementation of the second aspect, if the electricity consumption load of the campus is less than or equal to the first load threshold and is greater than or equal to a second load threshold, the rectification device sends fourth information to the charger, where the fourth information is used to indicate that the rectification device and/or the energy storage device are/is to supply power to the motor. In the foregoing possible implementation, the rectification device and/or the energy storage device supply/supplies power to the motor, thereby meeting a charging requirement of an electric vehicle, and also fully utilizing electric energy provided by the power grid.

In a possible implementation of the second aspect, the rectification device is connected to a power distribution apparatus, and that the rectification device obtains electricity consumption load of a campus includes: The rectification device receives indication information from the power distribution apparatus, where the indication information is used to indicate the electricity consumption load of the campus. In the foregoing possible implementation, the rectification device obtains the electricity consumption load of the campus, and obtains a peak electricity consumption value and a trough electricity consumption value of the campus based on the electricity consumption load of the campus, to ensure electricity consumption of other devices in the campus.

In a possible implementation of the second aspect, the rectification device receives service information sent by the charger, where the service information includes user information and vehicle information of the first vehicle. The rectification device determines charging indication information based on the service information, where the charging indication information is used to indicate a charging power used by the first charging pile to charge the first vehicle. The rectification device sends the charging indication information to the charger. In the foregoing possible implementation, the charging indication information is determined based on the service information, to ensure the charging power used by the first charging pile to charge the first vehicle.

In a possible implementation of the second aspect, the vehicle information is used to indicate at least one type of information about the first vehicle: a vehicle model, a remaining electricity quantity, and a battery charging curve; and the user information is used to indicate at least one of the following information: a user level and specified charging duration. In the foregoing possible implementation, the charging power used by the first charging pile to charge the first vehicle is ensured by using the service information.

In a possible implementation of the second aspect, when the user information includes the user level, after the rectification device receives the first information from the charger, the method further includes: If the user level is a specified user level, the rectification device sends fifth information to the charger, where the fifth information is used to indicate that the rectification device is to supply power to the charger. In the foregoing possible implementation, if the user level is a specified user level, the rectification device supplies power to the charger, thereby meeting a charging requirement of an electric vehicle, and also improving charging experience of a user.

According to a fourth aspect, a rectification device is provided. The rectification device includes: a second receiving unit, configured to receive first information from a charger, where the first information is used to indicate that a first charging pile is to charge a first vehicle; a second obtaining unit, configured to obtain electricity consumption load of the campus, where the electricity consumption load of the campus is electricity consumption load of a campus in which the rectification device and the charger are located; a comparison unit, configured to compare the electricity consumption load of the campus with a first load threshold; and a second sending unit, configured to send second information to the charger if the electricity consumption load of the campus is greater than the first load threshold, where the second information is used to indicate that an energy storage device is to supply power to the charger.

In a possible implementation of the fourth aspect, the comparison unit is further configured to compare the electricity consumption load of the campus with a second load threshold. If the electricity consumption load of the campus is less than the second load threshold, the second sending unit is further configured to send third information to the charger, where the third information is used to indicate that the rectification device is to supply power to the charger, and the second load threshold is less than the first load threshold.

In a possible implementation of the fourth aspect, the rectification device is connected to the energy storage device, and the rectification device further includes a charging unit. If the electricity consumption load of the campus is less than the second load threshold, the charging unit is configured to charge the energy storage device.

In a possible implementation of the fourth aspect, if the electricity consumption load of the campus is less than or equal to the first load threshold and is greater than or equal to a second load threshold, the second sending unit is further configured to send fourth information to the charger, where the fourth information is used to indicate that the rectification device and/or the energy storage device are/is to supply power to the charger.

In a possible implementation of the fourth aspect, the rectification device is connected to a power distribution apparatus, and the second receiving unit is further configured to receive indication information from the power distribution apparatus, where the indication information is used to indicate the electricity consumption load of the campus.

In a possible implementation of the fourth aspect, the rectification device further includes a second determining unit. The second receiving unit is further configured to receive service information sent by the charger, where the service information includes user information and vehicle information of the first vehicle. The second determining unit is configured to determine charging indication information based on the service information, where the charging indication information is used to indicate a charging power used by the first charging pile to charge the first vehicle. The second sending unit is further configured to send the charging indication information to the charger.

In a possible implementation of the fourth aspect, the vehicle information is used to indicate at least one type of information about the first vehicle: a vehicle model, a remaining electricity quantity, and a battery charging curve; and the user information is used to indicate at least one of the following information: a user level and specified charging duration.

In a possible implementation of the fourth aspect, when the user information includes the user level, after the second receiving unit receives the first information from the charger, if the user level is a specified user level, the second sending unit is further configured to send fifth information to the charger, where the fifth information is used to indicate that the rectification device is to supply power to the charger.

According to a fifth aspect, a charging system is provided. The charging system includes a rectification device, an energy storage device, a charging device, and a charger. The rectification device, the energy storage device, and the charging device are connected to each other. The rectification device is the rectification device provided in any one of the fourth aspect or the possible implementations of the fourth aspect.

According to another aspect of this application, a charging device is provided. The charging device includes a charger. The charger includes a processor and a memory that are coupled to each other. The memory includes a program instruction. The processor performs the charging control method provided in any one of the first aspect or the possible implementations of the first aspect.

According to another aspect of this application, a rectification device is provided. The rectification device includes a processor and a memory that are coupled to each other. The memory includes a program instruction. The processor performs the charging control method provided in any one of the second aspect or the possible implementations of the second aspect.

According to another aspect of this application, a computer-readable storage medium is provided. The computer-readable storage medium includes computer instructions. When the computer instructions are run, the charging control method provided in any one of the first aspect or the possible implementations of the first aspect is performed.

According to another aspect of this application, a computer-readable storage medium is provided. The computer-readable storage medium includes computer instructions. When the computer instructions are run, the charging control method provided in any one of the second aspect or the possible implementations of the second aspect is performed.

It can be understood that any one of the apparatuses provided in the foregoing descriptions may be configured to perform a corresponding method provided in the foregoing descriptions. Therefore, for a beneficial effect that can be achieved by the apparatus, refer to a beneficial effect of the corresponding method provided in the foregoing descriptions. Details are not described herein again.

## BRIEF DESCRIPTION OF DRAWINGS

FIG. 1 is a schematic diagram of a structure of a charging system in a conventional technology;

FIG. 2 is a schematic diagram of a structure of a conventional charging system;

FIG. 3 is a schematic diagram of a structure of a charging system according to an embodiment of this application;

FIG. 4 is a flowchart of a charging control method according to an embodiment of this application;

FIG. 5 is a schematic diagram of a battery charging curve according to an embodiment of this application;

FIG. 6 is a flowchart of another charging control method according to an embodiment of this application;

FIG. 7 is a flowchart of still another charging control method according to an embodiment of this application;

FIG. 8A and FIG. 8B are a flowchart of a charging control method according to an embodiment of this application;

FIG. 9 is a schematic diagram of a structure of a charger according to an embodiment of this application;

FIG. 10 is a schematic diagram of a structure of a rectification device according to an embodiment of this application;

FIG. 11 is a schematic diagram of a structure of another charger according to an embodiment of this application; and

FIG. 12 is a schematic diagram of a structure of another rectification device according to an embodiment of this application.

## DESCRIPTION OF EMBODIMENTS

In this application, at least one means one or more, and a plurality of means two or more. And/or describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, or c may indicate: a, b, c, a-b, a-c, b-c, or a-b-c, where a, b, and c may be singular or plural. In addition, in embodiments of this application, terms such as "first" and "second" are used to distinguish between same items or similar items that have a basically same function and effect. For example, a first threshold and a second threshold are merely intended to distinguish between different thresholds, but not to limit a sequence of the thresholds. A person skilled in the art can understand that the terms such as "first" and "second" are not intended to limit a quantity or an execution sequence.

It should be noted that, in embodiments of this application, the word "exemplary" or "for example" is used to represent giving an example, an illustration, or a description. Any embodiment or design scheme described as an "exemplary" or "for example" in embodiments of this application should not be explained as being more preferred or having more advantages than another embodiment or design scheme. Exactly, use of the word "exemplary" or "example" or the like is intended to present a relative concept in a specific manner.

Before embodiments of this application are described, background technologies related to a charging system are described first.

With rapid development of electric vehicle technologies, an electric vehicle population is continuously increasing. Therefore, a charging system is required to meet a charging requirement of an electric vehicle. In an early stage of development of electric vehicles, an electric vehicle is usually charged by using a charging system shown in FIG. 2.

FIG. 2 is a schematic diagram of a structure of a conventional charging system. The charging system includes a transformer, a plurality of charging modules, and a plurality of charging piles (the charging pile may also be referred to as a charging terminal) that are deployed in a campus. The transformer is connected to the plurality of charging modules, and is configured to convert an alternating-current voltage with a large value into an alternating-current voltage with a small value, and supply power to the plurality of charging modules. For example, the transformer may be configured to convert a 10 kV alternating-current voltage into a 400 V alternating-current voltage. The plurality of charging modules are respectively connected to the plurality of charging piles. Each of the plurality of charging modules may be configured to implement conversion between an alternating-current voltage and a direct-current voltage, for example, configured to convert a 400 V alternating-current voltage into a 380 V direct-current voltage. Each charging module is further configured to control a charging pile connected to the charging module to be turned on or turned off, to charge an electric vehicle connected to the charging pile. Specifically, for each of the plurality of charging modules, when the charging module detects that an electric vehicle is connected to a charging pile connected to the charging module, the charging module converts a received alternating-current voltage into a direct-current voltage, and controls the charging pile connected to the charging module to charge the corresponding electric vehicle by using the direct-current voltage.

The conventional charging system directly charges an electric vehicle by using the transformer in the campus during peak hours of residential electricity consumption. This increases a peak value of power load of the campus, and therefore increases a burden of a power grid. In this case, in a charging system provided in a conventional technology, as shown in FIG. 1, during peak hours of residential electricity consumption, a charging pile power control unit turns off a charging pile or reduces an output power of the charging pile, to reduce a burden of a power grid and preferentially ensure residential electricity consumption. However, in the manner of turning off the charging pile, a quantity of times of turning on and turning off the charging pile is increased, and a service life of the charging pile is shortened; and in the manner of reducing the output power of the charging pile, a charging time is prolonged, and user experience is degraded.

Based on this, embodiments of this application provide a charging system and a charging control method based on the charging system. The charging system includes an energy storage device. In the charging control method, during peak hours of residential electricity consumption, the energy storage device supplies power to a charging device, to charge an electric vehicle. This can reduce a burden of a power grid, and also ensure a service life of a charging pile and user experience. The following describes the charging system first.

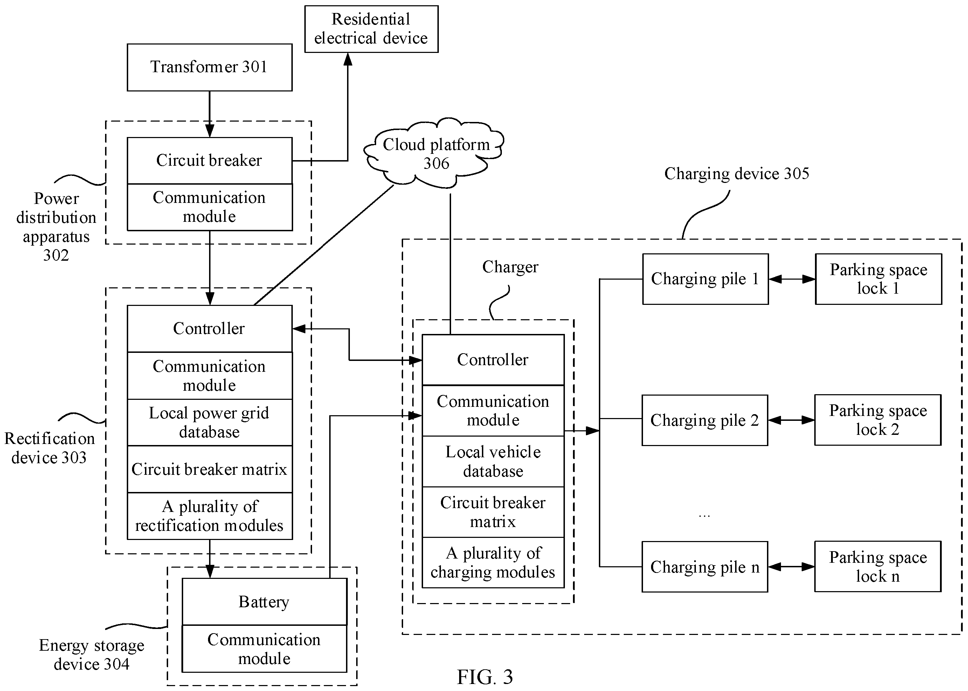

FIG. 3 is a schematic diagram of a structure of a charging system according to an embodiment of this application. The charging system may be used in a campus. As shown in FIG. 3, the charging system includes a transformer 301, a power distribution apparatus 302, a rectification device 303, an energy storage device 304, and a charging device 305 that are deployed in the campus. The transformer 301 is connected to the power distribution apparatus 302. The power distribution apparatus 302 is connected to the rectification device 303. The rectification device 303 is connected to the energy storage device 304 and the charging device 305.

The transformer 301 may be configured to supply power to the power distribution apparatus 302. For example, the transformer is connected to a power grid, and is configured to receive an alternating-current voltage provided by the power grid, and perform buck conversion on the alternating-current voltage. A voltage obtained through buck conversion may be used to supply power to the power distribution apparatus 302. For example, the transformer is connected to a 10 kV power grid, and is configured to convert a 10 kV alternating-current voltage into a 400 V alternating-current voltage. The 400 V alternating-current voltage may be used to supply power to the power distribution apparatus 302.

The power distribution apparatus 302 may be configured to supply power to a load, obtain information about the load, and so on. The load may include a residential electrical device and the rectification device 303. For example, the power distribution apparatus 301 may include a circuit breaker and a communication module. The circuit breaker is configured to receive an alternating-current voltage provided by the transformer 301, and supply power to the residential electrical device and/or the rectification device 303 based on the alternating-current voltage. The circuit breaker may be further configured to obtain electricity consumption load information of the residential electrical device. The communication module may be configured to support the power distribution apparatus 302 in communication, for example, support the power distribution apparatus 302 in communicating with the rectification device 303 through Ethernet, a controller area network (controller area network, CAN), or a 4G network.

The rectification device 303 may be configured to convert an alternating-current voltage into a direct-current voltage, control the energy storage device 304 and the charging device 305, detect a power of the energy storage device 304, communicate with the power distribution apparatus 302 and the charging device 305, and so on. For example, the rectification device 303 may include a plurality of rectification modules, a circuit breaker matrix, a local power grid database, a communication module, and a controller. Each of the plurality of rectification modules may be configured to implement the conversion from an alternating-current voltage into a direct-current voltage. The circuit breaker matrix includes a plurality of circuit breakers, and each circuit breaker may be configured to turn on or turn off one or more of the plurality of rectification modules. The communication module may be configured to support the rectification device 303 in communicating with a cloud platform, the power distribution apparatus 302, and the charging device 305. For example, the communication module may be configured to support the rectification device 303 in receiving the electricity consumption load information of the residential electrical device that is sent by the power distribution apparatus 302. The local power grid database may be configured to store the electricity consumption load information. The controller may be configured to control one or more circuit breakers in the circuit breaker matrix to be switched on or switched off, control the energy storage device 304 to start or stop, detect a power of the energy storage device 304, and so on.

The energy storage device 304 may be configured to receive a direct-current voltage provided by the rectification device 303, and store energy based on the direct-current voltage. The energy storage device 304 may be further configured to supply power to the charging device 305. For example, the energy storage device 304 may include a battery and a communication module. The battery may be configured to store the energy. The communication module may be configured to support the energy storage device 304 in communicating with the rectification device 303.

The charging device 305 may include a charger and a plurality of charging piles. The charger may be configured to implement buck conversion of a direct-current voltage, control the plurality of charging piles to be turned off or turned on, adjust output powers of the plurality of charging piles, and so on. For example, the charger includes a plurality of charging modules, a circuit breaker matrix, a local vehicle database, a controller, and a communication module. Each of the plurality of charging modules may be configured to implement the buck conversion function. The circuit breaker matrix includes a plurality of circuit breakers, and each circuit breaker may be configured to turn on or turn off one or more of the plurality of charging modules. The communication module may be configured to support the charger in communicating with the rectification device 303. The controller may be configured to control one or more circuit breakers in the circuit breaker matrix to be switched on or switched off, control the plurality of charging piles to be turned off or turned on, and adjust output powers of the plurality of charging piles. The local vehicle database may be configured to store battery charging curves corresponding to different vehicle models, and the battery charging curves may be used to indicate optimal charging powers corresponding to different battery levels.

Optionally, the charging device 305 may further include a plurality of parking space locks. Each of the parking space locks corresponds to one charging pile, and the charging pile may be configured to control the corresponding parking space lock to be enabled or disabled, and so on. For example, when a charging pile is charging a corresponding electric vehicle, the charging pile may enable a corresponding parking space lock; or when a charging pile is idle, the charging pile may disable a corresponding parking space lock.

Further, the charging system may further include a cloud platform 306. The cloud platform 306 may be configured to receive related electricity consumption information sent by the rectification device 303 and the charging device 305, and perform analysis, statistics collection, storage, and the like based on the related information. For example, the related electricity consumption information may include electricity consumption load of a residential electrical device in the campus in different time periods, and battery charging curves corresponding to different vehicle models.

The following describes the charging control method provided in this application with reference to the charging system shown in FIG. 3.

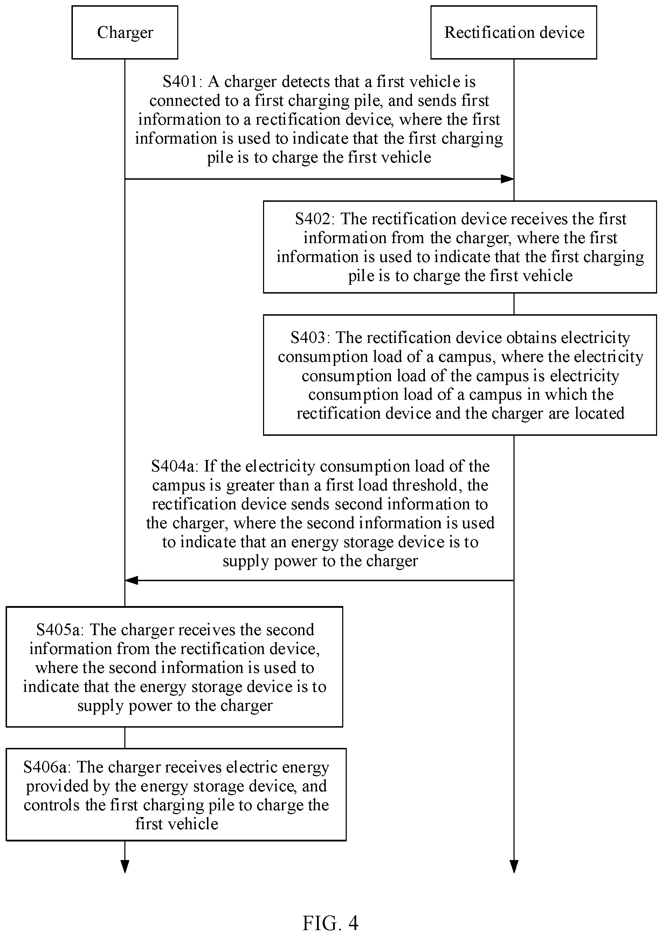

FIG. 4 is a schematic flowchart of a charging control method according to an embodiment of this application. As shown in FIG. 4, the charging control method includes the following steps.

S401: A charger detects that a first vehicle is connected to a first charging pile, and sends first information to a rectification device, where the first information is used to indicate that the first charging pile is to charge the first vehicle.

The charger is connected to a plurality of charging piles, and the first charging pile may be any one of the plurality of charging piles. For example, the plurality of charging piles may include 10 charging piles and may be denoted as C1 to C10. The first charging pile may be any one of the 10 charging piles, and the first charging pile may be C1 or C4.

In addition, the first information may include vehicle information of the first vehicle, charging information of the charger, information about the first charging pile, and the like. For example, the vehicle information may include a vehicle model, a remaining electricity quantity, a battery charging curve, and the like of the first vehicle; the charging information of the charger may include a remaining charging power of the charger, and the like; and the information about the first charging pile may include an identifier of the first charging pile.

Further, before the charger sends the first information to the rectification device, the charger may further obtain service information of the first vehicle, and send the service information to the rectification device. The service information may include the vehicle information of the first vehicle. Optionally, the service information may further include user information. For example, the user information may include an identifier of a user who needs to charge the first vehicle, and payment information bound to the user identifier.

It should be noted that the charger may separately send the first information and the service information to the rectification device through two times of sending, or may send the first information and the service information to the rectification device through one time of sending. This is not specifically limited in this embodiment of this application.

S402: The rectification device receives the first information from the charger, where the first information is used to indicate that the first charging pile is to charge the first vehicle.

Correspondingly, when the charger further sends the service information to the rectification device, the rectification device may further receive the service information.

S403: The rectification device obtains electricity consumption load of a campus, where the electricity consumption load of the campus is electricity consumption load of a campus in which the rectification device and the charger are located.

The electricity consumption load of the campus may also be referred to as an electricity consumption power of the campus. Electricity consumption of the campus may include electricity consumption of the rectification device and electricity consumption of a residential electrical device in the campus. The electricity consumption of the residential electrical device in the campus may include electricity consumption of a device other than the rectification device in the campus. The electricity consumption load of the campus is electricity consumption load of the residential electrical device in the campus.

In a possible embodiment, the rectification device receives indication information from a power distribution apparatus, where the indication information is used to indicate the electricity consumption load of the campus, so that the rectification device may determine the electricity consumption load of the campus according to the indication information. The power distribution apparatus may be configured to obtain electricity consumption load information of an electrical device in the campus at different moments, and send the electricity consumption load information to the rectification device. For example, the power distribution apparatus may periodically obtain the electricity consumption load information, and send the electricity consumption load information to the rectification device after obtaining the electricity consumption load information each time.

When the rectification device obtains the electricity consumption load of the campus, the rectification device may obtain, through comparison, a magnitude relationship between the electricity consumption load of the campus and at least one load threshold, where the at least one load threshold may include one or more preset load thresholds. An example in which the at least one load threshold includes a first load threshold and a second load threshold and the first load threshold is greater than the second load threshold is used for description below.

S404a: If the electricity consumption load of the campus is greater than the first load threshold, the rectification device sends second information to the charger, where the second information is used to indicate that an energy storage device is to supply power to the charger.

The first load threshold is a load value when electricity consumption of the electrical device in the campus is at a load peak, namely, a power value when an electricity consumption power of the electrical device in the campus reaches a maximum value. The first load threshold may also be referred to as a peak load value. The first load threshold may be stored on the rectification device. For example, the first load threshold may be stored in a local power grid database on the rectification device. Optionally, the first load threshold may be a value calculated by the rectification device based on a power of a transformer and a peak-hour electricity consumption coefficient (to be specific, an electricity consumption coefficient during peak hours of electricity consumption load) of the electrical device in the campus. The first load threshold meets a formula (1):

First load threshold = Power of the transformer $\times$ Peak - hour electricity consumption coefficient

The peak-hour electricity consumption coefficient is a peak value of annual electricity consumption load of the electrical device in the campus, and may be specifically calculated based on daily electricity consumption load of the electrical device in the campus. For example, a peak value of daily electricity consumption load is calculated based on the daily electricity consumption load of the electrical device in the campus, and then the peak value of annual electricity consumption load of the electrical device in the campus is calculated based on peak values of daily electricity consumption load within a year.

For example, the power of the transformer is denoted as Pt, the peak value of daily electricity consumption load is denoted as Pi, where a value range of i is 1 to 365, and the peak-hour electricity consumption coefficient is denoted as Kf. In this case, Kf meets a formula (2):

$$Kf = \sum_{i=1}^{365} \frac{Pi}{p_t} \Big/ 365 \qquad (2)$$

Specifically, the rectification device compares the electricity consumption load of the campus with the first load threshold. If the electricity consumption load of the campus is greater than the first load threshold, it indicates that the electricity consumption load of the campus is at a load peak. Therefore, the rectification device may send the second information to the charger, where the second information is used to indicate that the energy storage device is to supply power to the charger. Further, the rectification device may further control the energy storage device to start, so that the energy storage device supplies power to the charger.

Optionally, the rectification device may further send charging indication information to the charger, where the charging indication information is used to indicate a charging power used by the first charging pile to charge the first vehicle. For example, when the rectification device receives the service information of the first vehicle and the first information that are sent by the charger, the rectification device may determine the charging indication information based on the service information and the first information, for example, determine the charging indication information based on information such as the battery charging curve of the first vehicle, the remaining charging power of the charger, and the remaining electricity quantity of the first vehicle.

S405a: The charger receives the second information from the rectification device, where the second information is used to indicate that the energy storage device is to supply power to the charger.

Further, when the rectification device further sends the charging indication information to the charger, the charger may further receive the charging indication information from the rectification device, where the charging indication information is used to indicate the charging power used by the first charging pile to charge the first vehicle.

S406a: The charger receives electric energy provided by the energy storage device, and controls the first charging pile to charge the first vehicle.

In a possible embodiment, when the charger receives the electric energy provided by the energy storage device, the charger may control or adjust a charging power of the first charging pile based on the remaining electricity quantity of the first vehicle, the battery charging curve of the first vehicle, and the remaining charging power of the charger, to charge the first vehicle, where the charging power of the first charging pile is an optimal charging power that adapts to the first vehicle.

The battery charging curve of the first vehicle indicates optimal charging powers of a battery at different battery levels. The charger may locally obtain the battery charging curve of the first vehicle. For example, the battery charging curve is pre-stored in a local vehicle database of the charger, the local vehicle database may include battery charging curves corresponding to different vehicle models, and the charger may obtain the battery charging curve from the local vehicle database of the charger based on the vehicle model of the first vehicle.

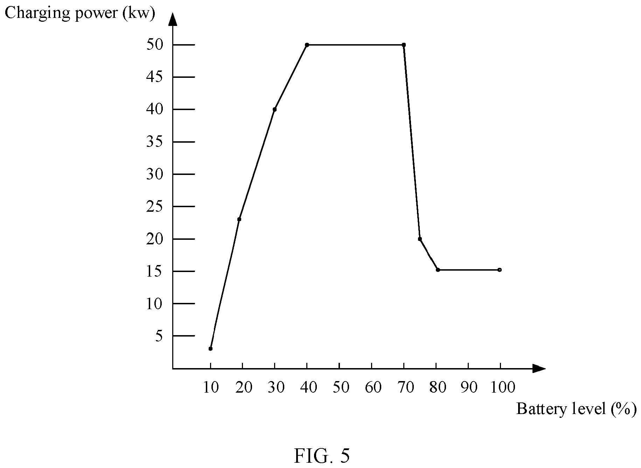

For example, it is assumed that FIG. 5 is a schematic diagram of the battery charging curve corresponding to the vehicle model of the first vehicle. As shown in FIG. 5, when a battery level of the first vehicle is 10%, the charging power of the first vehicle is 3 kW; when a battery level of the first vehicle is 20%, the charging power of the first vehicle is 23 kW; when a battery level of the first vehicle is 30%, the charging power of the first vehicle is 40 kW; when a battery level of the first vehicle is 40% to 70%, the charging power of the first vehicle is 50 kW; when a battery level of the first vehicle is 75%, the charging power of the first vehicle is 20 kW; or when a battery level of the first vehicle is 80% to 100%, the charging power of the first vehicle is 15 kW.

In an example, if the battery level of the first vehicle is 30%, the charging power corresponding to the battery charging curve of the first vehicle is 40 kW. In this case, if the remaining power of the charger is 30 kW, the charger receives the electric energy provided by the energy storage device, and charges the first vehicle at a power of 30 kW; or if the remaining power of the charger is 50 kW, the charger receives the electric energy provided by the energy storage device, and charges the first vehicle at a power of 40 kW.

In another possible embodiment, when the charger further receives the charging indication information from the rectification device, when receiving the electric energy provided by the energy storage device, the charger may control or adjust a charging power of the first charging pile directly based on the charging indication information, to charge the first vehicle, where the charging power of the first charging pile is an optimal charging power that adapts to the first vehicle.

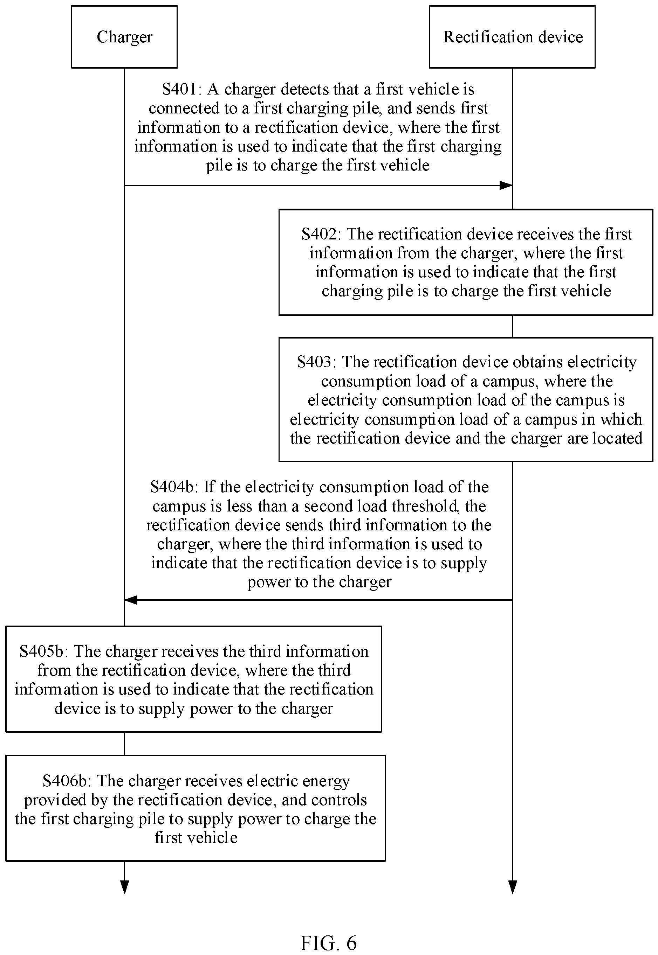

It should be noted that FIG. 4 shows a case in which the electricity consumption load of the campus is greater than the first load threshold. In the following, FIG. 6 shows that the electricity consumption load of the campus is less than the second load threshold. Correspondingly, as shown in FIG. 6, after S403, the method further includes the following steps.

S404b: If the electricity consumption load of the campus is less than the second load threshold, the rectification device sends third information to the charger, where the third information is used to indicate that the rectification device is to supply power to the charger.

The second load threshold is a load value when electricity consumption of the electrical device in the campus is at a load trough, namely, a power value when an electricity consumption power of the electrical device in the campus reaches a minimum value. The second load threshold may also be referred to as a trough load value. The second load threshold may be stored on the rectification device. For example, the second load threshold may be stored in a local power grid database on the rectification device. Optionally, the second load threshold may be a value calculated by the rectification device based on a power of a transformer and an off-peak-hour electricity consumption coefficient (to be specific, an electricity consumption coefficient during off-peak hours of electricity consumption load) of the electrical device in the campus. The second load threshold meets a formula (3):

$$\text{Second load threshold} = \text{Power of the transformer} \times \text{Off} - \text{peak} -$$

$$\text{hour electricity consumption coefficient} \tag{3}$$

The off-peak-hour electricity consumption coefficient is a trough value of annual electricity consumption load of the electrical device in the campus, and may be specifically calculated based on daily electricity consumption load of the electrical device in the campus. For example, a trough value of daily electricity consumption load is calculated based on the daily electricity consumption load of the electrical device in the campus, and then the trough value of annual electricity consumption load of the electrical device in the campus is calculated based on trough values of daily electricity consumption load within a year.

For example, the power of the transformer is denoted as Pt, the trough value of daily electricity consumption load is denoted as Pi, where a value range of i is 1 to 365, and the off-peak-hour electricity consumption coefficient is denoted as Kg. In this case, Kf meets a formula (4):

$$Kg = \sum_{i=1}^{365} \frac{Pi}{Pt} \Big/ 365 \tag{4}$$

In addition, the second load threshold is less than the first load threshold. For example, if the second load threshold is A and the first load threshold is B, A is less than B.

Specifically, the rectification device compares the electricity consumption load of the campus with the second load threshold. If the electricity consumption load of the campus is less than the second load threshold, it indicates that the electricity consumption load of the campus is at a load trough. Therefore, the rectification device may send the third information to the charger, where the third information is used to indicate that the rectification device is to supply power to the charger.

In a possible embodiment, if the electricity consumption load of the campus is less than the second load threshold, the rectification device charges the energy storage device. Specifically, the rectification device may control the energy storage device to start, and the energy storage device receives electric energy provided by the rectification device, and stores the electric energy.

Further, the rectification device may further obtain electricity quantity information of the energy storage device. For example, the electricity quantity information may be used to indicate a battery level of the energy storage device. The rectification device may determine, based on the electricity quantity information, whether to continue to charge the energy storage device. For example, if the battery level of the energy storage device is less than a rated electricity quantity of the energy storage device, the rectification device continues to charge the energy storage device; or if the battery level of the energy storage device is equal to the rated electricity quantity of the energy storage device, the rectification device no longer charges the energy storage device.

S405b: The charger receives the third information from the rectification device, where the third information is used to indicate that the rectification device is to supply power to the charger.

S406b: The charger receives electric energy provided by the rectification device, and controls the first charging pile to supply power to charge the first vehicle.

A process of controlling, by the charger, the first charging pile to supply power to charge the first vehicle is the same as the charging process in S406a. For details, refer to the charging process in S406. Details are not described herein again.

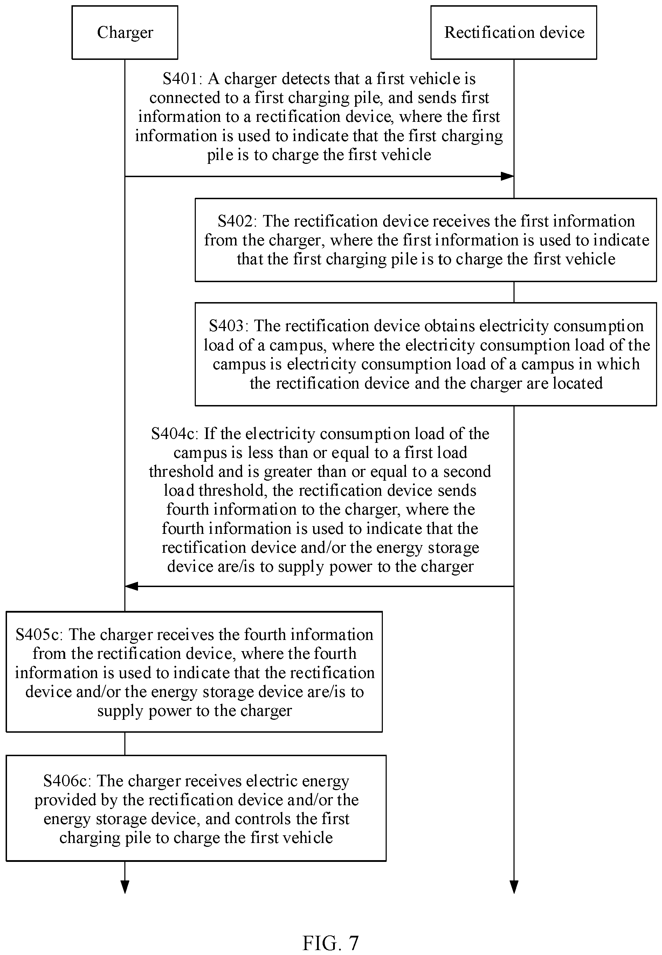

It should be noted that FIG. 6 shows a case in which the electricity consumption load of the campus is less than the second load threshold. In the following, FIG. 7 shows that the electricity consumption load of the campus is less than or equal to the first load threshold and is greater than or equal to the second load threshold. Correspondingly, as shown in FIG. 7, after S403, the method further includes the following steps.

S404c: If the electricity consumption load of the campus is less than or equal to the first load threshold and is greater than or equal to the second load threshold, the rectification device sends fourth information to the charger, where the fourth information is used to indicate that the rectification device and/or the energy storage device are/is to supply power to the charger.

The electricity consumption load of the campus is compared with the first load threshold and the second load threshold. If the electricity consumption load of the campus is less than or equal to the first load threshold and is greater than or equal to the second load threshold, it indicates that the electricity consumption load of the campus is greater than a load trough and is less than a load peak, in other words, the electricity consumption load of the campus is in a middle stage of load.

Further, if a power of the rectification device is greater than a power required for charging the first vehicle, the rectification device may send the fourth information to the charger, where the fourth information is used to indicate that the rectification device is to supply power to the charger.

Optionally, if the power of the rectification device is less than the power required for charging the first vehicle, the rectification device may send the fourth information to the charger, where the fourth information is used to indicate that the rectification device and the energy storage device are to supply power to the charger. Further, the rectification device may further control the energy storage device to start, so that the energy storage device supplies power to the charger.

S405c: The charger receives the fourth information from the rectification device, where the fourth information is used to indicate that the rectification device and/or the energy storage device are/is to supply power to the charger.

S406c: The charger receives electric energy provided by the rectification device and/or the energy storage device, and controls the first charging pile to charge the first vehicle.

A process of controlling, by the charger, the first charging pile to supply power to charge the first vehicle is the same as the charging process in S406a. For details, refer to the charging process in S406a. Details are not described herein again.

Further, in the descriptions of S401, the user information sent by the charger to the rectification device further includes at least one of the following: a user level and specified charging duration.

In a possible embodiment, when the user information further includes the user level and the user level is a specified user level (for example, the user level is VIP), after the rectification device receives the first information, the rectification device may directly send fifth information to the charger, where the fifth information is used to indicate that the rectification device is to supply power to the charger. Correspondingly, the charger may receive the fifth information sent by the rectification device, and after receiving the fifth information, receive electric energy provided by the energy storage device, and control the first charging pile to charge the first vehicle. It should be noted that, when the user level is the specified user level and the electricity consumption load of the campus is in any one of the foregoing three scenarios (the electricity consumption load of the campus is at the load peak, at the load trough, or in the middle stage of load), the charger receives the electric energy provided by the energy storage device, and controls the first charging pile to charge the first vehicle. In this process, a charging requirement of an electric vehicle is met, and charging experience of an electric vehicle user is also improved.

In another possible embodiment, when the user information further includes the specified charging duration, the rectification device may further determine the charging indication information comprehensively based on the specified charging duration and other information in the service information sent by the charger. For example, if duration of the specified charging duration is less than preset duration, the rectification device may increase a charging power indicated in the charging indication information; or if duration of the specified charging duration is greater than preset duration, the rectification device may reduce a charging power indicated in the charging indication information. In this process, a charging requirement of an electric vehicle is met, and a requirement of an electric vehicle user is also met, thereby improving charging experience of the electric vehicle user.

In the method provided in this embodiment of this application, there may be three cases of the electricity consumption load of the campus. In a first case, the electricity consumption load of the campus is at a load peak, and the rectification device controls the energy storage device to supply power to the charger. This can meet a charging requirement of an electric vehicle, and also reduce impact of charging of the electric vehicle on a power grid during peak hours of load, thereby relieving a burden of the power grid. In addition, this improves charging experience of an electric vehicle user compared with the manner in FIG. 1 in which the charging pile power control unit turns off the charging pile or reduces the output power of the charging pile. In a second case, the electricity consumption load of the campus is at a load trough, and the rectification device supplies power to the charger, and charges the energy storage device. This meets a charging requirement of an electric vehicle, and also stores electric energy at the load trough, to supply power to the charger when the electricity consumption load of the campus is at a load peak. In this process, an electricity price at the load trough is lower than that at the load peak in the campus, thereby reducing electricity consumption costs. In a third case, the electricity consumption load of the campus is greater than a load trough and is less than a load peak, the rectification device and/or the energy storage device supply/supplies power to the charger. This meets a charging requirement of an electric vehicle, and also fully utilizes a power distribution capacity of the campus, thereby reducing an unnecessary increase in the power distribution capacity of the campus.

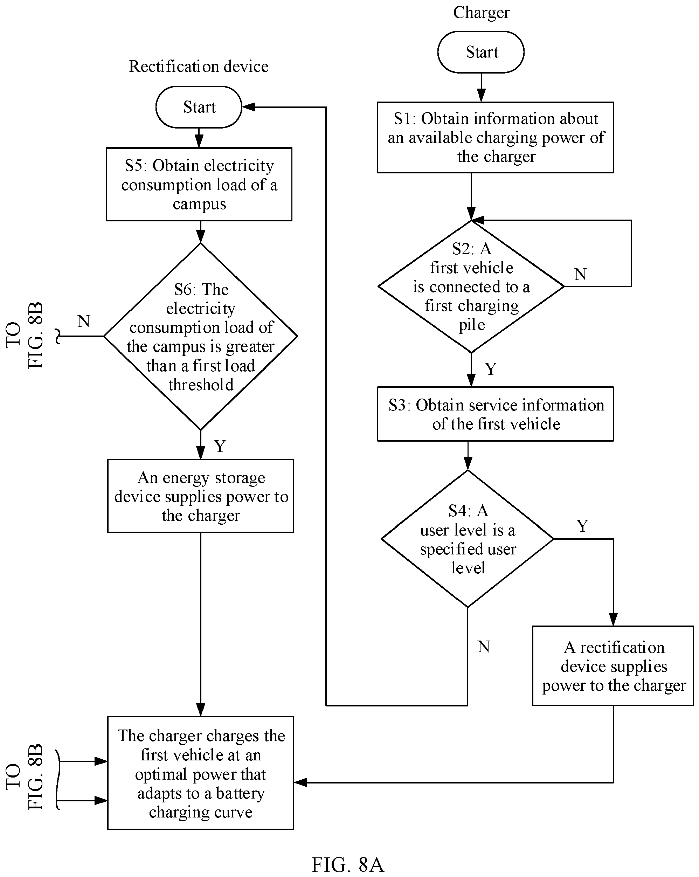

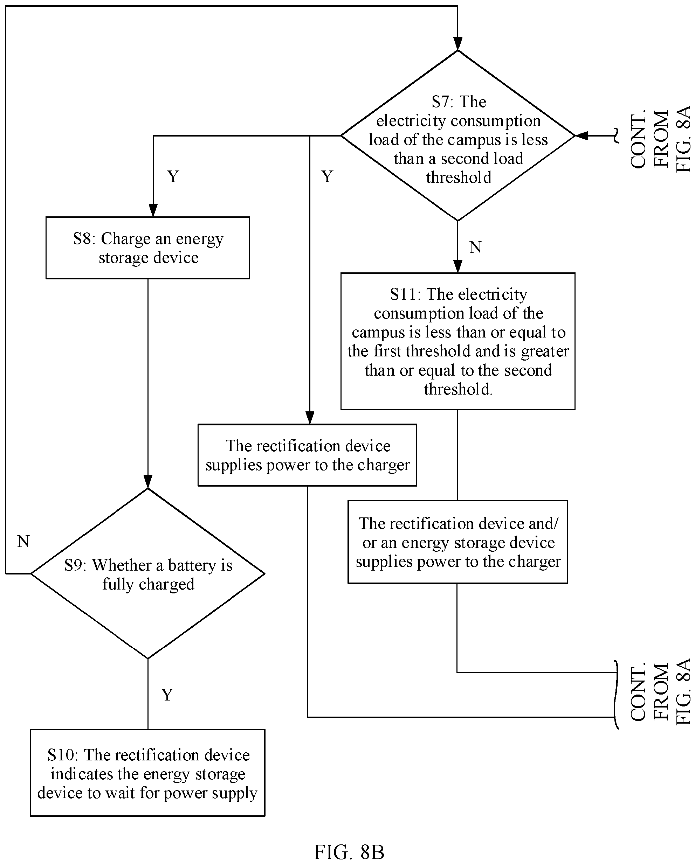

For ease of understanding, the following describes the technical solution provided in this application by using a flowchart shown in FIG. 8A and FIG. 8B as an example. As shown in FIG. 8A and FIG. 8B, the method includes: S1: A charger obtains information about an available charging power of the charger. S2: The charger determines whether a first vehicle is connected to a first charging pile. If no first vehicle is connected to the first charging pile (namely, N), S2 is performed again; or if a first vehicle is connected to the first charging pile (namely, Y), S3 is performed. S3: The charger obtains service information of the first vehicle. S4: The charger determines whether a user level of the first vehicle is a specified user level. If the user level is the specified user level (namely, Y), a rectification device supplies power to the charger; or if the user level is not the specified user level (namely, N), the charger sends first information to the rectification device. S5: When the rectification device receives the first information, the rectification device obtains electricity consumption load of a campus. S6: The rectification device determines whether the electricity consumption load of the campus is greater than a first load threshold. If the electricity consumption load of the campus is greater than the first load threshold (namely, Y), an energy storage device supplies power to the charger; or if the electricity consumption load of the campus is less than the first load threshold (namely, N), S7 is performed. S7: The rectification device determines whether the electricity consumption load of the campus is less than a second load threshold. If the electricity consumption load of the campus is less than the second load threshold (namely, Y), the rectification device supplies power to the charger and performs S8. S8: The rectification device charges the energy storage device. S9: The rectification device determines whether a battery of the energy storage device is fully charged. If the battery of the energy storage device is not fully charged (namely, N), the rectification device continues to perform S7; or if the battery of the energy storage device is fully charged (namely, Y), S10 is performed. S10: The rectification device indicates the energy storage device to wait for power supply. If the electricity consumption load of the campus is greater than the second load threshold (namely, N) in S7, S11 is performed. S11: If the electricity consumption load of the campus is greater than or equal to the second threshold and is less than or equal to the first threshold, the rectification device and/or the energy storage device supply/supplies power to the charger. In S4, S6, S7, and S11, after receiving electric energy, the charger charges the first vehicle at an optimal power that adapts to a battery charging curve.

It can be understood that, to implement the foregoing functions, the charger and the rectification device include corresponding hardware structures and/or software modules for performing the functions. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of the charger and the rectification device may be obtained through division based on the foregoing method examples. For example, the functional modules may be obtained through division based on the corresponding functions, or at least two functions may be integrated in one processing module. The integrated module may be implemented in a form of hardware, or may be implemented in a form of a software functional module. It should be noted that, in this embodiment of this application, module division is exemplary, and is merely a logical function division. In actual implementation, another division manner may be used.

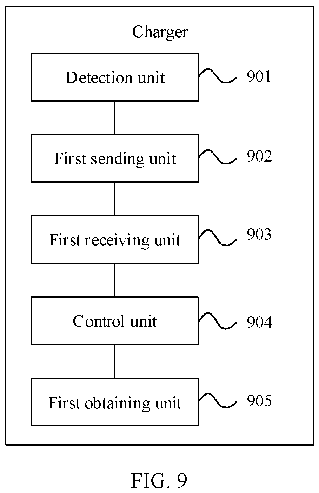

When the functional modules are obtained through division based on the corresponding functions, FIG. 9 is a schematic diagram of a possible structure of the charger in the foregoing embodiments. The charger includes a detection unit 901, a first sending unit 902, a first receiving unit 903, and a control unit 904. The detection unit 901 and the first sending unit 902 are configured to support the charger in performing S401 in the foregoing method embodiments. The first receiving unit 903 is configured to support the charger in performing one or more steps of S405a, S405b, S405c, S406a, S406b, and S406c in the foregoing method embodiments. The control unit 904 is configured to support the charger in performing one or more steps of S406a, S406b, and S406c in the foregoing method embodiments.

Optionally, the charger further includes a first obtaining unit 905. The first obtaining unit 905 is configured to obtain service information, where the service information includes user information and vehicle information of the first vehicle.

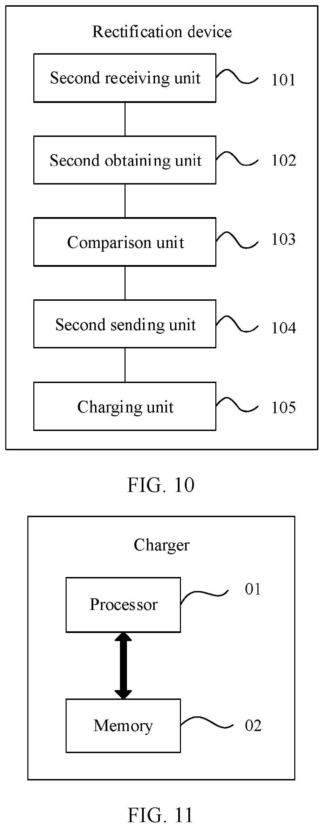

When the functional modules are obtained through division based on the corresponding functions, FIG. 10 is a schematic diagram of a possible structure of the rectification device in the foregoing embodiments. The rectification device includes a second receiving unit 101, a second obtaining unit 102, a comparison unit 103, and a second sending unit 104. The second receiving unit 101 is configured to support the rectification device in performing S402 in the foregoing method embodiments. The second obtaining unit 102 is configured to support the rectification device in performing S403 in the foregoing method embodiments. The comparison unit 103 and the second sending unit 104 are configured to support the rectification device in performing S404a, S404b, and S404c in the foregoing method embodiments.

Optionally, the rectification device further includes a charging unit 105, and the charging unit 105 is configured to charge the energy storage device.

FIG. 11 is a schematic diagram of another possible structure of the charger in the foregoing embodiments according to an embodiment of this application. The charger includes a processor 01 and a memory 02, and the memory 02 is configured to store code and data of the charger. In this embodiment of this application, the processor 01 is configured to control and manage an action of the charger. For example, the processor 01 is configured to support the charger in performing S401, S405a, S405b, S405c, S406a, S406b, and S406c in the foregoing method embodiments, and/or is used for other processes of the technology described in this specification.

The processor 01 may be a central processing unit, a general-purpose processor, a digital signal processor, an application-specific integrated circuit, a field programmable gate array or another programmable logical device, a transistor logical device, a hardware component, or any combination thereof. The processor 01 may implement or execute various example logical blocks, modules, and circuits described with reference to content disclosed in this application. Alternatively, the processor 01 may be a combination of processors implementing a computing function, for example, a combination of one or more microprocessors, or a combination of the digital signal processor and a microprocessor.

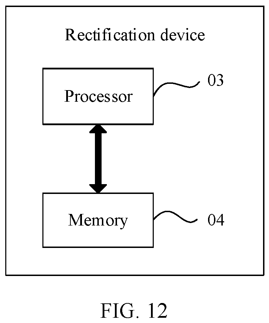

FIG. 12 is a schematic diagram of another possible structure of the rectification device in the foregoing embodiments according to an embodiment of this application. The charger includes a processor 03 and a memory 04, and the memory 04 is configured to store code and data of the charger. In this embodiment of this application, the processor 03 is configured to control and manage an action of the charger. For example, the processor 03 is configured to support the charger in performing S402, S403, S404a, S404b, and S404c in the foregoing method embodiments, and/or is used for other processes of the technology described in this specification.

The processor 03 may be a central processing unit, a general-purpose processor, a digital signal processor, an application-specific integrated circuit, a field programmable gate array or another programmable logical device, a transistor logical device, a hardware component, or any combination thereof. The processor 03 may implement or execute various example logical blocks, modules, and circuits described with reference to content disclosed in this application. Alternatively, the processor 03 may be a combination of processors implementing a computing function, for example, a combination of one or more microprocessors, or a combination of the digital signal processor and a microprocessor.

It should be noted that all related content of the steps in the foregoing method embodiments may be cited in function description of corresponding function modules. Details are not described herein again. Each device (for example, the charger and the rectification device) provided in this embodiment of this application is configured to perform functions of a corresponding device in the foregoing embodiments, and therefore can achieve an effect that is the same as that of the foregoing control method.

According to an aspect of this application, an embodiment of this application further provides a charging system. The charging system includes a rectification device, an energy storage device, a charger, and a plurality of charging piles. The rectification device is connected to the charger and the energy storage device. The charger is connected to the energy storage device and the plurality of charging piles. The charger includes the charger provided in FIG. 9. The rectification device includes the rectification device provided in FIG. 10. For related descriptions of the charger and the rectification device, refer to related descriptions of the charger and the rectification device that are provided in the foregoing descriptions. Details are not described herein again in this embodiment of this application.

In the several embodiments provided in this application, it should be understood that the disclosed device and method may be implemented in other manners. For example, the described device embodiment is merely an example. For example, the module and division into the units is merely logical function division and may be other division in actual implementation. For example, a plurality of units or components may be combined or integrated into another system, or some features may be ignored or not performed.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for enabling an apparatus to perform all or some of the steps of the methods described in embodiments of this application. The foregoing storage medium includes any medium that can store program code, such as a USB flash drive, a removable hard disk, a ROM, a RAM, a magnetic disk, or an optical disc.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A charging control method, applied to a rectification device (303), wherein the method comprises:

   receiving, by the rectification device (303), first information from a charger, wherein the first information is used to indicate that a first charging pile is to charge a first vehicle, and wherein a charging device (305) comprises the charger, and wherein the rectification device (303) is connected to the charging device (305);
   obtaining, by the rectification device (303), electricity consumption load of a campus, wherein the electricity consumption load of the campus is electricity consumption load of a campus in which the rectification device (303) and the charger are located;
   if the electricity consumption load of the campus is greater than a first load threshold, sending, by the rectification device (303), second information to the charger, wherein the second information is used to indicate that an energy storage device (304) is to supply power to the charger;
   control, by the rectification device (303), the energy storage device (304) to start so that the energy storage device (304) supplies power to the charger;
   if the electricity consumption load of the campus is less than or equal to the first load threshold and is greater than or equal to a second load threshold, and if the power of the rectification device (303) is less than the power required for charging the first vehicle, the rectification device (303) sends fourth information to the charger, where the fourth information is used to indicate that the rectification device (303) and the energy storage device (305) are to supply power to the charger,
   wherein the electricity consumption load of the campus less than or equal to the first load threshold and greater than or equal to the second load threshold indicates that the electricity consumption load of the campus is greater than a load trough and is less than a load peak, and
   wherein the rectification device (303) is configured to convert an alternating-current voltage into a direct-current voltage, control the energy storage device (304) and the charging device (305), detect a power of the energy storage device (304), and communicate with a power distribution apparatus (302), and the charging device (305).

2. The method according to claim 1, wherein the method further comprises:
   if the electricity consumption load of the campus is less than a second load threshold, sending, by the rectification device (303), third information to the charger, wherein the third information is used to indicate that the rectification device (303) is to supply power to the charger, and the second load threshold is less than the first load threshold.

3. The method according to claim 1 or 2, wherein the rectification device (303) is connected to the energy storage device (304), and the method further comprises:
if the electricity consumption load of the campus is less than the second load threshold, charging, by the rectification device (303), the energy storage device (304).

4. A rectification device, wherein the rectification device comprises:

a second receiving unit (101), configured to receive first information from a charger, wherein the first information is used to indicate that a first charging pile is to charge a first vehicle;
a second obtaining unit (102), configured to obtain electricity consumption load of the campus, wherein the electricity consumption load of the campus is electricity consumption load of a campus in which the rectification device (303) and the charger are located;
a comparison unit (103), configured to compare the electricity consumption load of the campus with a first load threshold; and
a second sending unit (104), configured to send second information to the charger if the electricity consumption load of the campus is greater than the first load threshold, wherein the second information is used to indicate that an energy storage device (304) is to supply power to the charger,
wherein the comparison unit (103) is further configured to:

compare the electricity consumption load of the campus with a second load threshold,
if the electricity consumption load of the campus is less than or equal to the first load threshold and is greater than or equal to the second load threshold, and if the power of the rectification device is less than the power required for charging the first vehicle, the second sending unit (104) is further configured to send fourth information to the charger, where the fourth information is used to indicate that the rectification device (303) and the energy storage device (304) are to supply power to the charger,
and wherein the electricity consumption load of the campus less than or equal to the first load threshold and greater than or equal to the second load threshold indicates that the electricity consumption load of the campus is greater than a load trough and is less than a load peak.

5. The rectification device according to claim 4, wherein the comparison unit (103) is further configured to:

compare the electricity consumption load of the campus with the second load threshold;
if the electricity consumption load of the campus is less than the second load threshold, the second sending unit (104) is further configured to send third information to the charger, wherein the third information is used to indicate that the rectification device (303) is to supply power to the charger, and the second load threshold is less than the first load threshold.

6. A charging system, wherein the charging system comprises a rectification device (303), an energy storage device (304), a charging device (305), and a charger; the rectification device (303), the energy storage device (305), and the charging device (305) are connected to each other; and the rectification device (303) comprises the rectification device (303) according to any one of claims 4 or 5.

**Patentansprüche**

1. Ladesteuerverfahren, das auf eine Gleichrichtungsvorrichtung (303) angewandt wird, wobei das Verfahren Folgendes umfasst:

Empfangen von ersten Informationen von einem Ladegerät durch die Gleichrichtungsvorrichtung (303), wobei die ersten Informationen verwendet werden, um anzugeben, dass eine erste Ladesäule ein erstes Fahrzeug aufladen soll, und wobei eine Ladevorrichtung (305) das Ladegerät umfasst und wobei die Gleichrichtungsvorrichtung (303) mit der Ladevorrichtung (305) verbunden ist;
Erhalten von Elektrizitätsverbrauchslast eines Geländes durch die Gleichrichtungsvorrichtung (303), wobei die Elektrizitätsverbrauchslast des Geländes die Elektrizitätsverbrauchslast eines Geländes ist, in dem sich die Gleichrichtungsvorrichtung (303) und das Ladegerät befinden;
wenn die Elektrizitätsverbrauchslast des Geländes größer als eine erste Lastschwelle ist, Senden von zweiten Informationen zu dem Ladegerät durch die Gleichrichtungsvorrichtung (303), wobei die zweiten Informationen verwendet werden, um anzugeben, dass eine Energiespeichervorrichtung (304) dem Ladegerät Strom liefern soll;

Steuern der Energiespeichervorrichtung (304) zum Starten durch die Gleichrichtungsvorrichtung (303), sodass die Energiespeichervorrichtung (304) dem Ladegerät Strom liefert;

wenn die Elektrizitätsverbrauchslast des Geländes kleiner oder gleich der ersten Lastschwelle ist und größer oder gleich einer zweiten Lastschwelle ist, und wenn die Leistung der Gleichrichtungsvorrichtung (303) kleiner als die zum Laden des ersten Fahrzeugs erforderliche Leistung ist, sendet die Gleichrichtungsvorrichtung (303) vierte Informationen zu dem Ladegerät, wobei die vierten Informationen verwendet werden, um anzugeben, dass die Gleichrichtungsvorrichtung (303) und die Energiespeichervorrichtung (305) dem Ladegerät Strom liefern sollen,

wobei, dass die Elektrizitätsverbrauchslast des Geländes kleiner oder gleich der ersten Lastschwelle ist und größer oder gleich der zweiten Lastschwelle ist, angibt, dass die Elektrizitätsverbrauchslast des Geländes größer als eine Lastmulde und kleiner als eine Lastspitze ist, und

wobei die Gleichrichtungsvorrichtung (303) ausgelegt ist zum Umwandeln einer Wechselspannung in eine Gleichspannung, Steuern der Energiespeichervorrichtung (304) und der Ladevorrichtung (305), Erkennen einer Leistung der Energiespeichervorrichtung (304) und Kommunizieren mit einer Stromverteilungsvorrichtung (302) und der Ladevorrichtung (305).

2. Verfahren nach Anspruch 1, wobei das Verfahren ferner Folgendes umfasst:
wenn die Elektrizitätsverbrauchslast des Geländes kleiner als eine zweite Lastschwelle ist, Senden von dritten Informationen zu dem Ladegerät durch die Gleichrichtungsvorrichtung (303), wobei die dritten Informationen verwendet werden, um anzugeben, dass die Gleichrichtungsvorrichtung (303) dem Ladegerät Strom liefern soll, und die zweite Lastschwelle kleiner als die erste Lastschwelle ist.

3. Verfahren nach Anspruch 1 oder 2, wobei die Gleichrichtungsvorrichtung (303) mit der Energiespeichervorrichtung (304) verbunden ist und das Verfahren ferner Folgendes umfasst:
wenn die Elektrizitätsverbrauchslast des Geländes kleiner als die zweite Lastschwelle ist, Laden der Energiespeichervorrichtung (304) durch die Gleichrichtungsvorrichtung (303).

4. Gleichrichtungsvorrichtung, wobei die Gleichrichtungsvorrichtung Folgendes umfasst:

eine zweite Empfangseinheit (101), ausgelegt zum Empfangen von ersten Informationen von einem Ladegerät, wobei die ersten Informationen verwendet werden, um anzugeben, dass eine erste Ladesäule ein erstes Fahrzeug aufladen soll,

eine zweite Erhalteeinheit (102), ausgelegt zum Erhalten von Elektrizitätsverbrauchslast des Geländes, wobei die Elektrizitätsverbrauchslast des Geländes die Elektrizitätsverbrauchslast eines Geländes ist, in dem sich die Gleichrichtungsvorrichtung (303) und das Ladegerät befinden;

eine Vergleichseinheit (103), ausgelegt zum Vergleichen der Elektrizitätsverbrauchslast des Geländes mit einer ersten Lastschwelle; und

eine zweite Sendeeinheit (104), ausgelegt zum Senden von zweiten Informationen zu dem Ladegerät, wenn die Elektrizitätsverbrauchslast des Geländes größer als die erste Lastschwelle ist, wobei die zweiten Informationen verwendet werden, um anzugeben, dass eine Energiespeichervorrichtung (304) dem Ladegerät Strom liefern soll,

wobei die Vergleichseinheit (103) ferner ausgelegt ist zum

Vergleichen der Elektrizitätsverbrauchslast des Geländes mit einer zweiten Lastschwelle,

wenn die Elektrizitätsverbrauchslast des Geländes kleiner oder gleich der ersten Lastschwelle ist und größer oder gleich einer zweiten Lastschwelle ist, und wenn die Leistung der Gleichrichtungsvorrichtung kleiner als die zum Laden des ersten Fahrzeugs erforderliche Leistung ist, ist die zweite Sendeeinheit (104) ferner ausgelegt zum Senden von vierten Informationen zu dem Ladegerät, wobei die vierten Informationen verwendet werden, um anzugeben, dass die Gleichrichtungsvorrichtung (303) und die Energiespeichervorrichtung (305) dem Ladegerät Strom liefern sollen, und wobei, dass die Elektrizitätsverbrauchslast des Geländes kleiner oder gleich der ersten Lastschwelle ist und größer oder gleich der zweiten Lastschwelle ist, angibt, dass die Elektrizitätsverbrauchslast des Geländes größer als eine Lastmulde und kleiner als eine Lastspitze ist.

5. Gleichrichtungsvorrichtung nach Anspruch 4, wobei die Vergleichseinheit (103) ferner ausgelegt ist zum

Vergleichen der Elektrizitätsverbrauchslast des Geländes mit der zweiten Lastschwelle,
wenn die Elektrizitätsverbrauchslast des Geländes kleiner als die zweite Lastschwelle ist, ist die zweite Sendeeinheit (104) ferner ausgelegt zum Senden von dritten Informationen zu dem Ladegerät, wobei die dritten Informationen verwendet werden, um anzugeben, dass die Gleichrichtungsvorrichtung (303) dem Ladegerät Strom liefern soll, und die zweite Lastschwelle kleiner als die erste Lastschwelle ist.

6. Ladesystem, wobei das Ladesystem eine Gleichrichtungsvorrichtung (303), eine Energiespeichervorrichtung (304), eine Ladevorrichtung (305) und ein Ladegerät umfasst; die Gleichrichtungsvorrichtung (303), die Energiespeichervorrichtung (305) und die Ladevorrichtung (305) miteinander verbunden sind; und die Gleichrichtungsvorrichtung (303) die Gleichrichtungsvorrichtung (303) nach einem der Ansprüche 4 oder 5 umfasst.

**Revendications**

1. Procédé de commande de charge, appliqué à un dispositif de redressement (303), le procédé comprenant :

la réception, par le dispositif de redressement (303), de premières informations en provenance d'un chargeur, les premières information étant utilisées pour indiquer qu'une première pile de charge doit charger un premier véhicule, et un dispositif de charge (305) comprenant le chargeur, et le dispositif de redressement (303) étant connecté au dispositif de charge (305) ;
l'obtention, par le dispositif de redressement (303), d'une charge de consommation d'électricité d'un campus, la charge de consommation d'électricité du campus étant une charge de consommation d'électricité d'un campus dans lequel le dispositif de redressement (303) et le chargeur se situent ;
si la charge de consommation d'électricité du campus est supérieure à un premier seuil de charge, l'envoi, par le dispositif de redressement (303), de deuxièmes informations au chargeur, les deuxièmes informations étant utilisées pour indiquer qu'un dispositif de stockage d'énergie (304) doit fournir de la puissance au chargeur ;
la commande, par le dispositif de redressement (303), du démarrage du dispositif de stockage d'énergie (304) de sorte que le dispositif de stockage d'énergie (304) fournit de la puissance au chargeur ;
si la charge de consommation d'électricité du campus est inférieure ou égale au premier seuil de charge et est supérieure ou égale à un deuxième seuil de charge, et si la puissance du dispositif de redressement (303) est inférieure à la puissance nécessaire pour charger le premier véhicule, le dispositif de redressement (303) envoyant des quatrièmes informations au chargeur, les quatrièmes informations étant utilisées pour indiquer que le dispositif de redressement (303) et le dispositif de stockage d'énergie (305) doivent fournir de la puissance au chargeur,
la charge de consommation d'électricité du campus inférieure ou égale au premier seuil de charge et supérieure ou égale au deuxième seuil de charge indiquant que la charge de consommation d'électricité du campus est supérieure à un creux de charge et est inférieure à une crête de charge, et
le dispositif de redressement (303) étant configuré pour convertir une tension à courant alternatif en tension à courant continu, commander le dispositif de stockage d'énergie (304) et le dispositif de charge (305), détecter une puissance du dispositif de stockage d'énergie (304) et communiquer avec un appareil de distribution de puissance (302) et le dispositif de charge (305).

2. Procédé selon la revendication 1, le procédé comprenant en outre :
si la charge de consommation d'électricité du campus est inférieure à un deuxième seuil de charge, l'envoi, par le dispositif de redressement (303), de troisièmes informations au chargeur, les troisièmes informations étant utilisées pour indiquer que le dispositif de redressement (303) doit fournir de la puissance au chargeur, et le deuxième seuil de charge étant inférieur au premier seuil de charge.

3. Procédé selon la revendication 1 ou 2, le dispositif de redressement (303) étant connecté au dispositif de stockage d'énergie (304), et le procédé comprenant en outre :
si la charge de consommation d'électricité du campus est inférieure au deuxième seuil de charge, la charge, par le dispositif de redressement (303), du dispositif de stockage d'énergie (304).

4. Dispositif de redressement, le dispositif de redressement comprenant :

une deuxième unité de réception (101), configurée pour recevoir des premières informations en provenance d'un chargeur, les premières information étant utilisées pour indiquer qu'une première pile de charge doit charger un premier véhicule ;
une deuxième unité d'obtention (102), configurée pour obtenir une charge de consommation d'électricité du campus, la charge de consommation d'électricité du campus étant une charge de consommation d'électricité d'un campus dans lequel le dispositif de redressement (303) et le chargeur se situent ;
une unité de comparaison (103), configurée pour comparer la charge de consommation d'électricité du campus avec un premier seuil de charge ; et

une deuxième unité d'envoi (104), configurée pour envoyer des deuxièmes informations au chargeur si la charge de consommation d'électricité du campus est supérieure au premier seuil de charge, les deuxièmes informations étant utilisées pour indiquer qu'un dispositif de stockage d'énergie (304) doit fournir de la puissance au chargeur, l'unité de comparaison (103) étant en outre configurée pour :

comparer la charge de consommation d'électricité du campus avec un deuxième seuil de charge,

si la charge de consommation d'électricité du campus est inférieure ou égale au premier seuil de charge et est supérieure ou égale au deuxième seuil de charge, et si la puissance du dispositif de redressement est inférieure à la puissance nécessaire pour charger le premier véhicule, la deuxième unité d'envoi (104) étant en outre configurée pour envoyer des quatrièmes informations au chargeur, les quatrièmes informations étant utilisées pour indiquer que le dispositif de redressement (303) et le dispositif de stockage d'énergie (305) doivent fournir de la puissance au chargeur,

et la charge de consommation d'électricité du campus inférieure ou égale au premier seuil de charge et supérieure ou égale au deuxième seuil de charge indiquant que la charge de consommation d'électricité du campus est supérieure à un creux de charge et est inférieure à une crête de charge.

5. Dispositif de redressement selon la revendication 4, l'unité de comparaison (103) étant en outre configurée pour :

comparer la charge de consommation d'électricité du campus avec le deuxième seuil de charge ;

si la charge de consommation d'électricité du campus est inférieure à un deuxième seuil de charge, la deuxième unité d'envoi (104) étant en outre configurée pour envoyer des troisièmes informations au chargeur, les troisièmes informations étant utilisées pour indiquer que le dispositif de redressement (303) doit fournir de la puissance au chargeur, et le deuxième seuil de charge étant inférieur au premier seuil de charge.

6. Système de charge, le système de charge comprenant un dispositif de redressement (303), un dispositif de stockage d'énergie (304), un dispositif de charge (305) et un chargeur ; le dispositif de redressement (303), le dispositif de stockage d'énergie (304), et le dispositif de charge (305) étant connectés les uns aux autres ; et le dispositif de redressement (303) comprenant le dispositif de redressement (303) selon l'une quelconque des revendications 4 ou 5.

FIG. 1

FIG. 2

FIG. 3

```
┌──────────────┐                              ┌─────────────────────┐
│   Charger    │                              │ Rectification device│
└──────┬───────┘                              └──────────┬──────────┘
       │                                                 │
```

S401: A charger detects that a first vehicle is connected to a first charging pile, and sends first information to a rectification device, where the first information is used to indicate that the first charging pile is to charge the first vehicle

S402: The rectification device receives the first information from the charger, where the first information is used to indicate that the first charging pile is to charge the first vehicle

S403: The rectification device obtains electricity consumption load of a campus, where the electricity consumption load of the campus is electricity consumption load of a campus in which the rectification device and the charger are located

S404a: If the electricity consumption load of the campus is greater than a first load threshold, the rectification device sends second information to the charger, where the second information is used to indicate that an energy storage device is to supply power to the charger

S405a: The charger receives the second information from the rectification device, where the second information is used to indicate that the energy storage device is to supply power to the charger

S406a: The charger receives electric energy provided by the energy storage device, and controls the first charging pile to charge the first vehicle

FIG. 4

Charging power (kw)

Battery level (%)

FIG. 5

```
┌─────────────────┐                          ┌──────────────────────┐
│     Charger     │                          │ Rectification device │
└────────┬────────┘                          └───────────┬──────────┘
         │                                                │
    S401: A charger detects that a first vehicle is       │
    connected to a first charging pile, and sends first   │
    information to a rectification device, where the first │
    information is used to indicate that the first charging │
    pile is to charge the first vehicle                    │
         │──────────────────────────────────────────────▶│
```

S402: The rectification device receives the first information from the charger, where the first information is used to indicate that the first charging pile is to charge the first vehicle

S403: The rectification device obtains electricity consumption load of a campus, where the electricity consumption load of the campus is electricity consumption load of a campus in which the rectification device and the charger are located

S404b: If the electricity consumption load of the campus is less than a second load threshold, the rectification device sends third information to the charger, where the third information is used to indicate that the rectification device is to supply power to the charger

S405b: The charger receives the third information from the rectification device, where the third information is used to indicate that the rectification device is to supply power to the charger

S406b: The charger receives electric energy provided by the rectification device, and controls the first charging pile to supply power to charge the first vehicle

FIG. 6

22

```
┌─────────────┐                              ┌─────────────────────┐
│   Charger   │                              │ Rectification device│
└─────────────┘                              └─────────────────────┘
```

S401: A charger detects that a first vehicle is connected to a first charging pile, and sends first information to a rectification device, where the first information is used to indicate that the first charging pile is to charge the first vehicle

S402: The rectification device receives the first information from the charger, where the first information is used to indicate that the first charging pile is to charge the first vehicle

S403: The rectification device obtains electricity consumption load of a campus, where the electricity consumption load of the campus is electricity consumption load of a campus in which the rectification device and the charger are located

S404c: If the electricity consumption load of the campus is less than or equal to a first load threshold and is greater than or equal to a second load threshold, the rectification device sends fourth information to the charger, where the fourth information is used to indicate that the rectification device and/or the energy storage device are/is to supply power to the charger

S405c: The charger receives the fourth information from the rectification device, where the fourth information is used to indicate that the rectification device and/or the energy storage device are/is to supply power to the charger

S406c: The charger receives electric energy provided by the rectification device and/or the energy storage device, and controls the first charging pile to charge the first vehicle

FIG. 7

Charger

Start

S1: Obtain information about an available charging power of the charger

S2: A first vehicle is connected to a first charging pile — N

Y

S3: Obtain service information of the first vehicle

S4: A user level is a specified user level — Y

N

A rectification device supplies power to the charger

Rectification device

Start

S5: Obtain electricity consumption load of a campus

S6: The electricity consumption load of the campus is greater than a first load threshold — N — TO FIG. 8B

Y

An energy storage device supplies power to the charger

TO FIG. 8B

The charger charges the first vehicle at an optimal power that adapts to a battery charging curve

FIG. 8A

S7: The electricity consumption load of the campus is less than a second load threshold

Y

Y

N

S8: Charge an energy storage device

S11: The electricity consumption load of the campus is less than or equal to the first threshold and is greater than or equal to the second threshold.

The rectification device supplies power to the charger

The rectification device and/or an energy storage device supplies power to the charger

N

S9: Whether a battery is fully charged

Y

S10: The rectification device indicates the energy storage device to wait for power supply

FIG. 8B

Charger

| Detection unit | 901 |

| First sending unit | 902 |

| First receiving unit | 903 |

| Control unit | 904 |

| First obtaining unit | 905 |

FIG. 9

Rectification device

Second receiving unit ~ 101

Second obtaining unit ~ 102

Comparison unit ~ 103

Second sending unit ~ 104

Charging unit ~ 105

FIG. 10

Charger

Processor ~ 01

Memory ~ 02

FIG. 11

Rectification device

Processor — 03

Memory — 04

FIG. 12

## REFERENCES CITED IN THE DESCRIPTION

**Patent documents cited in the description**

- US 2011204720 A1

- CN 110601334

**Non-patent literature cited in the description**

- **KISUK KIM et al.** Power demand and power quality analysis of EV charging station using BESS in Micro-grid. *Battery Energy Storage System (BESS)*

- **MAHMUD KHIZIR et al.** *Peak-Load Management in Commercial Systems with Electric Vehicles*